# EUROPEAN PATENT APPLICATION

(11) **EP 2 873 316 A1**
(43) Date of publication of application: **20.05.2015**
(21) Application number: 13817627.6
(22) Date of filing: 08.07.2013
(51) Int. Cl.: A01G 9/18, A01G 7/02

(54) **CARBON DIOXIDE SUPPLY DEVICE**

(30) Priority: 10.07.2012 JP 2012154593
(71) Applicant: Denso Corporation, Kariya-shi, Aichi 448-8661 (JP)
(72) Inventor: TANAKA, Masaaki, Kariya-shi Aichi 448-8661 (JP)
(74) Representative: Vigand, Philippe
(86) International application number: PCT/JP2013/068661
(87) International publication number: WO 2014/010561

(57) **Abstract**

A carbon dioxide supply device provided with a combustor (1), a refrigerator (3), and a heat exchanger (6) for heat absorption through which a fluid flows having been cooled in a refrigeration cycle of the refrigerator (3), the carbon dioxide supply device being characterized in that exhaust gas containing carbon dioxide and obtained by combustion in the combustor (1) is passed through the heat exchanger (6) for heat absorption and cooled, and is supplied to a horticultural greenhouse facility.

## Description

### Technical Field

The present invention relates to a carbon dioxide supply device for supplying carbon dioxide for utilization for the photosynthesis of plants in horticultural greenhouses etc.

### Background Art

In a conventional horticultural greenhouse, usually, the windows connecting the inside and outside of the greenhouse are opened or closed to adjust the temperature and humidity in the greenhouse. Along with this, sunlight or artificial light is utilized for the light which is required for the plants to perform photosynthesis. To realize an environment suitable for the plants regardless of the outside air environment, a boiler for heating use, a humidifier for adjusting the humidity, etc. are sometimes installed. In such a horticultural greenhouse, air introduced from the outside is utilized to secure the carbon dioxide (CO₂) which is consumed at the time of photosynthesis, the CO₂ which microorganisms living in the soil etc. produce is utilized, industrially produced CO₂ gas is utilized, the CO₂ which is produced at the time of burning fuel or after an oxidation reaction is utilized, or other methods are used.

There are problems in the above CO₂ supply methods. For air introduced from the outside, the environment inside the greenhouse changes at the time of supply of CO₂ by the air introduced from the outside. For this reason, stress is given to the plants or energy loss occurs in adjusting the environment to deal with the air introduced from the outside. Further, the phenomenon that when photosynthesis is actively going on, raising the concentration of CO₂ and causing more CO₂ to be consumed promotes plant growth more is generally known from the literature etc. However, the amount of CO₂ in the outside air is about 400 ppm. With just outside air, it is not possible to raise the concentration of CO₂ when photosynthesis is actively going on. For the CO₂ which is produced by microorganisms in the soil etc., the amount of CO₂ is governed by the activity of the source microorganisms, so stable supply is difficult. For the utilization of industrially produced CO₂ gas, there are no factors governed by the environment inside the greenhouse and the desired amount of CO₂ can be supplied, but in general transport costs are incurred for transporting the CO₂ gas from its place of production to the greenhouse, so there is the problem of higher unit prices of the CO₂ gas. Further, to reduce the transport costs, it is necessary to install large-scale storage tanks and other facilities at the greenhouse side. There are the problems of high initial investment and limited availability etc.

On the other hand, as a general method of burning fuel to produce CO₂, PLT 1 discloses a device which supplies combustion gas by a fan into a greenhouse. In such a device, the heat at the time of combustion is simultaneously supplied to the inside of the greenhouse. In a greenhouse which utilizes sunlight, during the day, solar heat is also supplied to more than a necessary extent. Under such a situation, in addition to the CO₂ which is required in the greenhouse, the heat of the combustion gas is unnecessarily supplied, so the temperature inside of the greenhouse rises and an environment suitable for the plants can no longer be maintained. If therefore opening the windows for adjustment of the temperature and humidity to suppress the temperature rise, the temperature will drop, but the CO₂ which was supplied by the combustion will end up being simultaneously discharged to the outside and the concentration of CO₂ will no longer be able to be raised.

Further, the supplied CO₂ gas becomes CO₂ which contains the heat of combustion, so it becomes difficult to supply the produced CO₂ directly to the vicinity of the plants. As a countermeasure, PLT 2 discloses a system of exchanging the heat of the exhaust gas with a fluid so as to lower the temperature of the exhaust gas. However, after removing the heat which is produced together with the CO₂, it is merely discarded at a cooling tower etc. There was therefore the problem that it was not possible to effectively utilize the energy of the fuel.

### Citations List

### Patent Literature

PLT 1: Japanese Unexamined Patent Publication No. 2004-135639A
PLT 2: Japanese Patent Unexamined Publication No. 2004-344154A

### Summary of Invention

### Technical Problem

The present invention, in view of the above problem, provides a carbon dioxide supply device which effectively utilizes the heat which is produced when supplying CO₂.

### Solution to Problem

To solve the above problem, the invention of claim 1 is a carbon dioxide supply device comprising a combustor (1), a refrigerator (3), and a heat-absorption use heat exchanger (6) through which a fluid cooled by a refrigeration cycle of the refrigerator (3) flows, wherein carbon dioxide supply device runs exhaust gas, which contains carbon dioxide obtained in the case of combustion at the combustor (1), through the heat-absorption use heat exchanger (6) for cooling, and supplies the exhaust gas to the inside of a horticultural greenhouse.

Note that the reference notations attached above are examples which show the correspondence with specific embodiments which are described in the later explained embodiments.

### Brief Description of Drawings

FIG. 1 is a schematic view of the configuration of a first embodiment of the present invention (combustor 1 is ON).
FIG. 2A is a schematic view of the configuration of a heat-driven refrigerator (adsorption-type refrigeration cycle by first adsorber 101b) of a first embodiment of the present invention.
FIG. 2B is a schematic view of the configuration of a heat-driven refrigerator (adsorption-type refrigeration cycle by second adsorber 101c) of the first embodiment of the present invention.
FIG. 3 is a schematic view of the configuration of the first embodiment of the present invention (combustor 1 is OFF).
FIG. 4 is a schematic view of the configuration of a second embodiment of the present invention (combustor 1 is ON).
FIG. 5 is a schematic view of the configuration of the second embodiment of the present invention (combustor 1 is OFF).
FIG. 6 is a schematic view of the configuration of a heat-driven refrigerator in a third embodiment of the present invention (absorption-type refrigeration cycle).
FIG. 7 is a schematic view of the configuration of a heat-driven refrigerator in the third embodiment of the present invention (absorption-type refrigeration cycle).
FIG. 8 is a schematic view of the configuration of a fourth embodiment of the present invention.
FIG. 9 is a schematic view of the configuration of another embodiment of the present invention.
FIG. 10 is a schematic view of the configuration of a fifth embodiment of the present invention.

### Description of Embodiments

Below, referring to the drawings, embodiments of the present invention will be explained. In the embodiments, parts configured the same are assigned the same reference notations and explanations will be omitted.

### First Embodiment

A first embodiment of the present invention artificially supplies CO₂ to the inside of a horticultural greenhouse by burning fuel in a combustor 1 and supplying exhaust gas which contains CO₂ to the inside of the greenhouse. At that time, inside of the combustor, heat exchange is performed with the heat which is generated at the time of combustion to produce warm water. This warm water is supplied to a heat-driven (heat-powered) refrigerator 3. The heat-driven refrigerator 3 converts the supplied warm water to energy to produce cold water. The produced cold water is then supplied to a heat-absorption use heat exchanger 6 to cool the exhaust gas which contains CO₂. Cooling the exhaust gas is preferable for lowering the temperature to one which enables direct supply of the gas to the plants inside the greenhouse. However, it is not necessary to cool the gas to a temperature which enables direct supply. It is also possible to use an additional cooler etc. to further cool the gas and then supply it to the plants in the greenhouse. The example of cooling to a temperature which enables direct supply of the gas to the plants explained above is merely one example.

The combustor 1 is not limited to a device exclusively for combustion or a boiler for heating or supplying hot water etc. It is sufficient that it be one whose exhaust gas can be utilized. It is defined as an internal combustion engine, external combustion engine, fuel cell using steam reformation of fuel which contains carbon, or other device in a broad range of devices. The heat-driven refrigerator 3 of the first embodiment of the present invention will be explained with reference to an embodiment of use of an adsorption-type refrigeration cycle (adsorption refrigeration cycle), but the invention is not limited to this. It may also be an absorption-type refrigeration cycle (absorption refrigeration cycle) or normal refrigeration cycle which uses a compressor 3. Here, "refrigerator" will be used in the sense including all of these.

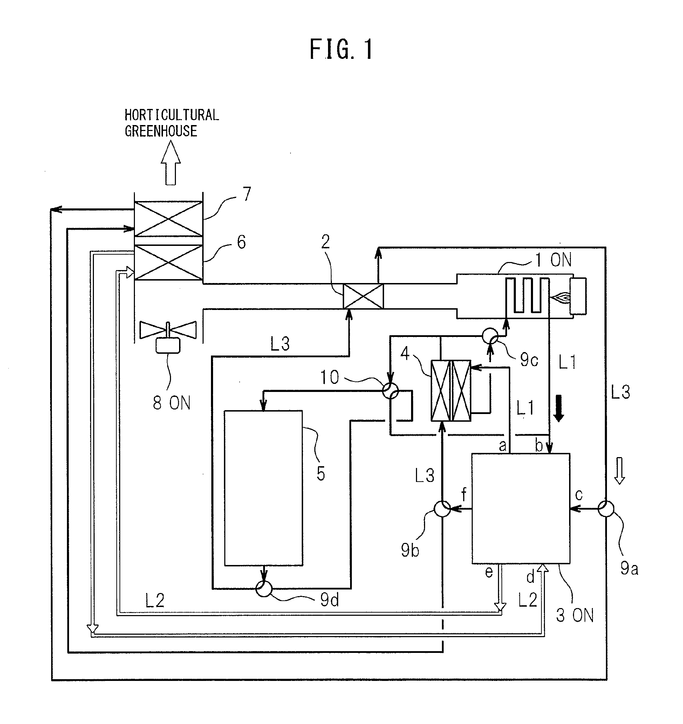

As shown in FIG. 1, the present embodiment is mainly provided with a combustor 1, a heat-driven refrigerator 3 which can absorb heat by utilizing the heat energy of the combustor 1, and a heat-absorption use heat exchanger 6 which uses the cooling water for heat-absorption use which is produced from the heat-driven refrigerator 3 to cool and adjust the moisture of the combustion gas which is discharged from the combustor 1. The combustor 1 discharges combustion gas which contains CO₂ to supply CO₂ to the inside of the horticultural greenhouse and produces warm water. The warm water which is raised in temperature by the combustor 1 passes through a piping circuit of a line L1 to be input to the heat-driven refrigerator 3 so the heat energy of the combustor 1 is utilized without waste and operates the adsorption-type refrigeration cycle (explained later) of the heat-driven refrigerator 3. Furthermore, the secondary heat exchanger 2 recovers the heat from the combustion gas which is produced at the combustor 1.

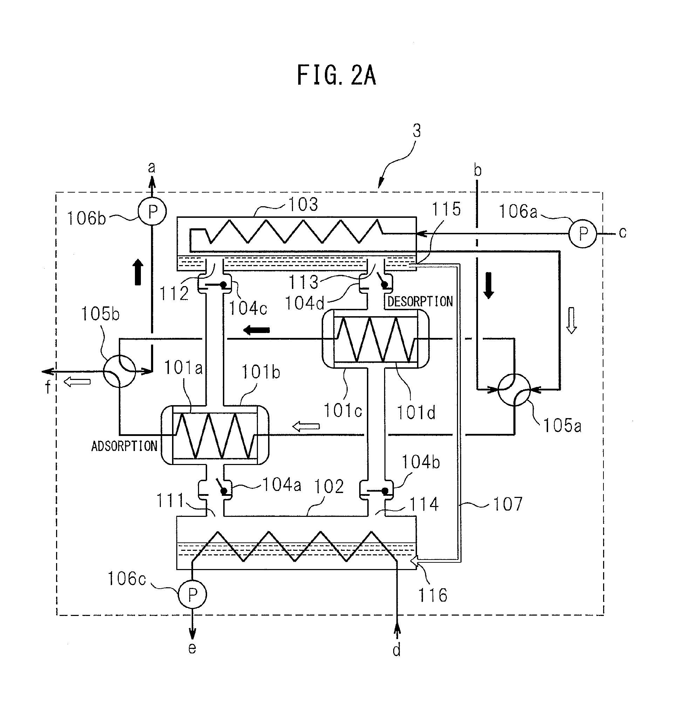

The cooling water, which is cooled by an evaporator 102 (see FIG. 2A) of the heat-driven refrigerator 3, is supplied from a connecting port "e" of the heat-driven refrigerator 3 through a circuit of a line L2 and is supplied to the heat-absorption use heat exchanger 6. The heat exchanger 6 is utilized for cooling and moisture adjustment of the combustion gas which contains CO₂ discharged from the combustor 1. The water is returned to a connecting port "d" of the heat-driven refrigerator 3. A line L3 over which fluid in a heat storage tank 5 flows is connected so that the fluid passes through a secondary heat exchanger 2 and connecting ports "c" and "f" of the heat-driven refrigerator 3 then returns to the heat storage tank 5. In the middle, in the line L3, a liquid-liquid heat exchanger 4 is set. This exchanges heat with the warm water after passing through the line L1 at the heat-driven refrigerator 3. In this way, heat is recovered from the warm water which passes through the line L1 at the liquid-liquid heat exchanger 4 at the line L3 and is stored in the heat storage tank 5. In configuring the present invention as an overall system, the presence of a heat storage tank 5 would be effective for heat recovery, but the present embodiment stands even without a heat storage tank 5. In this case, the line of the connecting ports "c" to "f" of the heat-driven refrigerator 3 can be made a line for cooling by a heat-dissipating use fan etc.

The combustion gas which contains the CO₂ which is produced by the combustor 1 is cooled by the heat-absorption use heat exchanger 6 to become a temperature suitable for plants and then is blown by a blower fan 8 to the inside of the horticultural greenhouse. Downstream of the heat-absorption use heat exchanger 6, a heat-discharge use heat exchanger 7 is installed. The air which is blown by the fan 8 passes through the heat-absorption use heat exchanger 6 and flows into the heat-discharge use heat exchanger 7.

The heat-driven refrigerator 3 has to discharge the heat of the warm water used, and discharge the heat which the adsorption-type refrigeration cycle absorbs as waste heat of the refrigerator itself. Therefore, the fluid in the heat storage tank 5 is utilized as cooling water at the line L3. The fluid as cooling water of this line L3 is passed through a secondary heat exchanger 2, in order to recover the heat which could not be removed at the combustor 1 from the exhaust gas before charging to the heat-driven refrigerator 3, while lowering the exhaust gas temperature. After recovering the heat of the exhaust gas, the fluid recovers the waste heat in the heat-driven refrigerator 3, then the heat of the fluid flowing out of the port "f" is exchanged with the warm water (in the line L1) used at the heat-driven refrigerator 3 through the liquid-liquid heat exchanger 4 and the fluid is stored as high temperature fluid in the heat storage tank 5. The heat of the heat storage tank 5, as explained later, can be utilized in the heat-discharge use heat exchanger 7 for discharging heat for heating or moisture adjustment. The present embodiment is configured provided with three-way valves 9a to 9d and a four-way valve 10 for switching between the "heat absorption + moisture adjustment + heat storage mode" and "moisture adjustment + heating mode". The three-way valves 9a to 9d and four-way valve 10 can be configured by a plurality of shutoff valves.

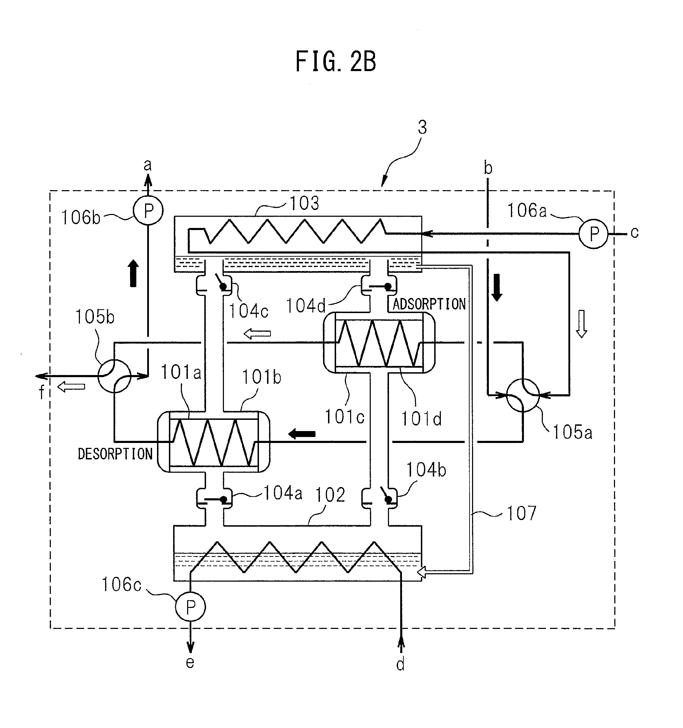

Adsorption-Type Refrigeration Cycle The adsorption-type refrigeration cycle of the heat-driven refrigerator 3 of the present embodiment will be explained with reference to FIGS. 2A and 2B. Note that, this adsorption-type refrigeration cycle is illustrated as one example. Any generally known adsorption-type refrigeration cycle can be applied in the present embodiment. FIG. 2A is a view where a first adsorber 101b of the adsorption-type refrigeration cycle of the present embodiment operates as an adsorption process, while the second adsorber 101c operates as a desorption process. On the other hand, FIG. 2B is a view of switching of the four-way valves 105a and 105b by 90° and the second adsorber 101c operating as an adsorption process and the first adsorber 101b operating as a desorption process.

This adsorption-type refrigeration cycle is comprised of a first adsorber 101b, condenser 103, second adsorber 101c, and evaporator 102 which are successively connected by piping in a ring so as to circulate the refrigerant. 106a to 106c are fluid-use pumps. As this fluid, in general, water is used, but it is also possible to use a fluid of a mixture of water with an ethyleneglycol-based antifreeze etc. The first adsorber 101b and the second adsorber 101c respectively contain a first adsorption core 101a and a second adsorption core 101d in which are packed adsorbents which, when cooled, adsorb a gaseous state refrigerant and, when heated, desorb the refrigerant. The absorbent adsorbs the surrounding steam whereby the liquid state refrigerant in the evaporator 102 evaporates. At the time of evaporation, heat is robbed from the fluid of the line L2 which flows through the inside of the evaporator 102 and cold water is produced.

This refrigeration cycle is provided with a pipe which extends from an output port 111 of the evaporator 102 through the first adsorber 101b to an input port 112 of the condenser 103, and a pipe which extends from an output port 113 of the condenser 103 through the second adsorber 101c to an input port 114 of the evaporator 102. Between the output port 111 of the evaporator 102 and the first adsorber 101b, a vapor-use valve (check valve) 104a is provided. The check valve 104a opens when the pressure of the first adsorber 101b side falls from the pressure of the evaporator 102 side below a predetermined value. This check valve 104a permits the flow of refrigerant from the evaporator 102 toward the first adsorber 101b and blocks the backflow of refrigerant in the opposite direction.

Between the first adsorber 101b and the input port 112 of the condenser 103, a vapor-use valve (check valve) 104c is provided. The check valve 104c opens when the pressure of the first adsorber 101b side rises above a predetermined value (higher pressure than pressure of condenser 103 side). This check valve 104c permits the flow of refrigerant the first adsorber 101b to the condenser 103 and blocks the backflow of refrigerant in the opposite direction.

In the same way, between the output port 114 of the evaporator 102 and the second adsorber 101c, a vapor-use valve (check valve) 104b is provided. The check valve 104b opens when the pressure of the second adsorber 101c side falls below the pressure at the evaporator 102 side by a predetermined value or more. This check valve 104b permits the flow of refrigerant from the evaporator 102 toward the second adsorber 101c and blocks the backflow of refrigerant in the opposite direction.

Between the second adsorber 101c and the input port 113 of the condenser 103, a vapor-use valve (check valve) 104d is provided. The check valve 104d opens when the pressure of the second adsorber 101c side rises above a predetermined value (higher pressure than pressure of condenser 103 side) or more. This check valve 104d permits the flow of refrigerant from the second adsorber 101c toward the condenser 103 and blocks backflow of the refrigerant in the opposite direction.

The first adsorption core 101a and the second adsorption core 101d are comprised of a known heat exchanger and large numbers of adsorbents which are attached to the surfaces of the tubes, fins, and other heat exchanging parts of the heat exchanger. The heat exchanger has a plurality of tubes through which a heating medium or a cooling medium flows, a header tank to which first ends of these tubes are joined and to which the heating medium or cooling medium is distributed or collected, and a large number of fins which are joined to the surfaces of the tubes, etc. The adsorbent has the function of trapping (adsorbing) the refrigerant vapor by being cooled, and disassociating (desorbing) the adsorbed refrigerant by being heated.

In the present embodiment, as the adsorbent, for example, as a main framework, one comprised of aluminum oxide, phosphoric acid, or oxysilicic acid, zeolite, silica gel, activated alumina, or activated carbon is employed. Here, by supplying through the tubes the heating medium to the first adsorption core 101a and the second adsorption core 101d, the adsorbents of the first and second adsorption cores 101a and 101d desorb the adsorbed refrigerant and discharge it as vapor.

At the bottom of a side part of the condenser 103, an output port 115 is formed which opens at the side surface of the condenser 103, while at the bottom of the side part of the evaporator 102, an input port 116 is formed which opens at the side surface of the evaporator 102. This is connected to the output port 115 of the condenser 103 through a pipe 107. The cooling water from the line L3 is used to condense the refrigerant in the condenser 103 and the refrigerant flows from the output port 115 of the condenser 103 by gravity or differential pressure to the input port 116 of the evaporator 102 for return. Due to this, when the first adsorber 101b or the second adsorber 101c operates as the desorption process, the discharged vapor of refrigerant liquefies in the condenser 103 and is supplied through the pipe 107 to the evaporator 102.

Next, the operation of the adsorption refrigeration cycle of the present embodiment will be explained. In the adsorption refrigeration cycle of the present embodiment, as shown in FIG. 2A, the first adsorber 101b operates as the adsorption process, while the second adsorber 101c operates as the desorption process. Next, as shown in FIG. 2B, the valve positions of the four-way valves 105a and 105b are switched 90° from the state which is shown in FIG. 2A whereby the second adsorber 101c operates as an adsorption process and the first adsorber 101b operates as a desorption process. The valve positions of the four-way valves 105a and 105b are controlled by an electronic control unit (hereinafter referred to as the "ECU"). The ECU alternately switches the four-way valves 105a and 105b to the valve positions which are shown in FIG. 2A and FIG. 2B during operation of the heat-driven device 3 every predetermined control period and repeatedly performs this switching control.

First, in FIG. 2A, the first adsorber 101b operates as the adsorption process, while the second adsorber 101c operates as the desorption process. In the previous process, the water vapor of the first adsorption core 101a is discharged. When finished being desorbed, it is cooled by the cooling water which flows through the connecting ports "c" and "f" whereby the water vapor absorption of the first adsorption core 101a starts and the inside of the first adsorber 101b is reduced in pressure. In the end, if the check valve 104a opens, along with adsorption of vapor of the first adsorption core 101a, the refrigerant in the evaporator 102 vaporizes, so the water in the pipe which flows in from the connecting port "d" of the line L2 is rapidly robbed of heat and cooled.

Before the first adsorption core 101a becomes saturated in absorption, the four-way valves 105a and 105b are switched 90° to the state of FIG. 2B under control by the ECU. This time, the second adsorption core 101d finishes desorption, so the vapor adsorption of the second adsorption core 101d starts and the inside of the second adsorber 101c is reduced in pressure. In the end, if the check valve 104b opens, evaporation of the refrigerant proceeds in the evaporator 102.

On the other hand, at this time, high temperature warm water flows into the first adsorption core 101a from the line L1 through the connecting port "b" to heat the first adsorption core 101a. Due to this, the first adsorption core 101a discharges vapor. The check valve 104c opens due to its pressure. The condenser 103 condenses the vapor, the first adsorption core 101a finishes desorption, and the adsorption capacity at the adsorption process is secured. In this way, control is performed by the ECU so that the state of FIG. 2A and the state of FIG. 2B are repeatedly alternated every predetermined control period. Due to this control, the water in the pipe which flows in from the connecting port "d" of the line L2 is robbed of heat and cooled at all times. Therefore, cold water is continuously supplied to the heat-absorption use heat exchanger 6 which is utilized for cooling the exhaust gas whereby it becomes possible to lower the temperature of the exhaust gas which is produced at the combustor 1.

As explained above, according to the present embodiment, to supply CO₂ artificially inside the horticultural greenhouse, exhaust gas which contains CO₂ produced by combustion at the combustor 1 is supplied to the inside of the horticultural greenhouse. At this time, inside the combustor 1, heat is exchanged with the heat which is generated at the time of combustion so as to produce warm water. This warm water is supplied to the heat-driven refrigerator 3. The heat-driven refrigerator converts the warm water to energy to produce cold water. The produced cold water can be supplied to the heat-absorption use heat exchanger 6.

As explained above, the heat which is produced at the combustor 1 is recovered and utilized while operating the heat-driven refrigerator 3. Further, by cooling the produced exhaust gas which contains CO₂ using the heat energy which the combustor 1 itself generates, it becomes possible to lower the temperature to a level enabling the gas to be directly supplied to the plant. The generated heat is recovered and stored. For this reason, when utilizing the present embodiment in a horticultural greenhouse, it is possible to suppress the rise in temperature of the horticultural greenhouse during the day, so opening and closing of the ventilation windows for temperature control are suppressed. As a result, compared with a usual combustion type CO₂ generator, it is possible to maintain the concentration of CO₂ in the horticultural greenhouse by a smaller amount of fuel. Further, there is the effect that when consuming the same amount of fuel, the concentration of CO₂ can be raised more.

The present embodiment is used for horticulture, so the above process operates at the time of photosynthesis. The heat which is generated at that time drives the heat-driven refrigerator 3 and is stored in the heat storage tank 5. As the heat which is stored in the heat storage tank, depending on the capacity of the refrigerator, in addition to the heat which the combustor 1 generates, the heat inside the horticultural greenhouse can be recovered and stored.

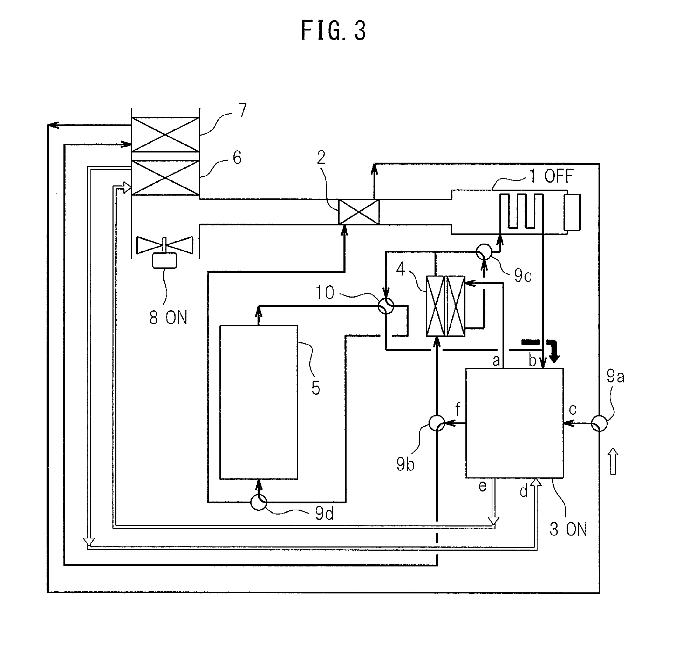

Next, the mode of heating or dehumidifying in the greenhouse will be explained, when photosynthesis is not being performed and there is no problem in plant growth even if not supplying CO₂ (FIG. 3 shows a configuration the same as FIG. 1 except for the positions of placement of the three-way valves 9a to 9d and the four-way valve 10. The outflow port of the heat storage tank 5 becomes the top in FIG. 3 and is changed to become opposite to FIG. 1). In the embodiment of FIG. 3, the air which is blown from the blower fan 8 passes through the heat-absorption use heat exchanger 6 and the heat-discharge use heat exchanger 7 in that order, but the invention is not necessarily limited to this. It is also possible to set the heat-discharge use heat exchanger 7 at any location and blow warm air into the greenhouse without dehumidifying it. When performing the dehumification and heating, the three-way valves 9a to 9d and four-way valve 10 of FIG. 1 are switched to set them as in FIG. 3 to normally set the combustor 1 OFF. The warm water of the heat storage tank 5 is supplied from the top part of the tank to the connecting port "b" of the heat-driven refrigerator 3 and the adsorption-type refrigeration cycle is operated.

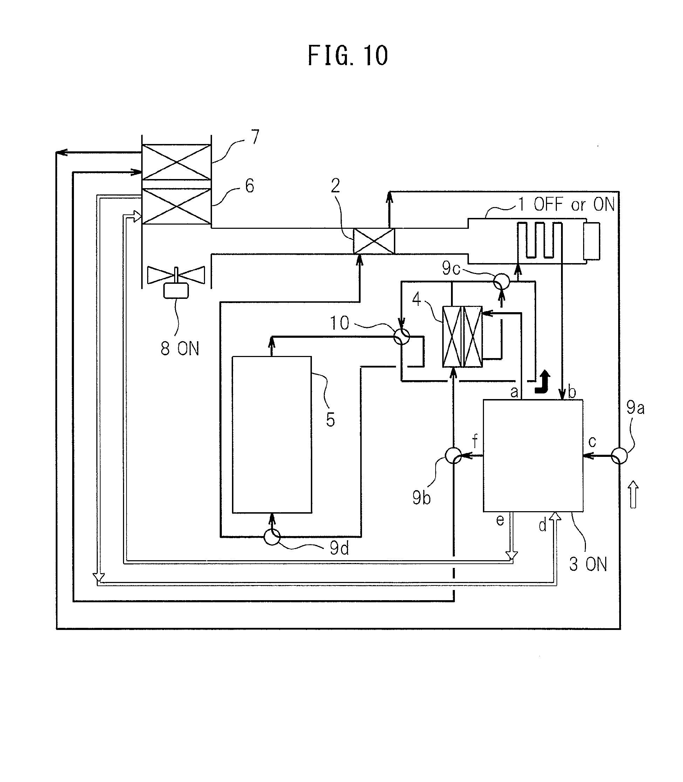

Due to this, cold water which is produced at the heat-driven refrigerator 3 is sent to the heat-absorption use heat exchanger 6 to cool the air which is blown from the blower fan 8. Furthermore, the cooling water which contains the waste heat produced in the heat-driven refrigerator 3 (warm water of predetermined temperature) flows out from the connecting port "f" of the heat-driven refrigerator 3 and is supplied to the heat-discharge use heat exchanger 7. Due to this, the amount of heat which is contained in the heat storage tank 5 can be used for dehumidifying and heating the air which is sent by the blower fan 8 to the inside of the horticultural greenhouse. The fluid which uses the amount of heat of the warm water returns to the bottom of the heat storage tank in FIG. 3. The warm water inside the heat storage tank 5 falls in temperature and enters a temperature region where the heat-driven refrigerator 3 cannot operate. The heat-discharge use heat exchanger 7 can be supplied with fluid containing the stored amount of heat through the heat-driven refrigerator 3. Heating is possible until the temperature inside the horticultural greenhouse and the fluid become the same temperature. Note that as shown by the fifth embodiment of FIG. 10, it is also possible to change the flow path of the first embodiment. This embodiment is an example where the flow path shown in FIG. 3 from the top opening of the heat storage tank 5 through the four-way valve 10 to the opening part "b" of the heat-driven refrigerator 3 is changed to a flow path as shown in FIG. 10 where the path is connected from the four-way valve 10 to the inlet of the combustor 1 and is connected through the combustor 1 to the opening part "b" of the heat-driven refrigerator 3. The rest is the same as the first embodiment. By the configuration of the fifth embodiment of FIG. 10, even if the amount of heat which is stored in the heat storage tank 5 falls at the time of dehumidification and heating, the combustor 1 can be turned ON to again increase the amount of heat storage in the heat storage tank 5. Therefore, compared with the first embodiment, a longer time of dehumification and heating can be made possible.

According to the first embodiment, the heat which is produced for supply of CO₂ becomes effectively utilized. Further, it becomes possible to cut the consumed energy of a heating device or dehumidifying device which is separately installed in a horticultural greenhouse and becomes possible to effectively utilize the energy which is utilized in a horticultural greenhouse. Further, dehumidification becomes possible by moisture adjustment in the state where the inside of the horticultural greenhouse is sealed. Therefore, compared with the system of making joint use of air introduced from the outside and heating during dehumidification, the heating energy can be reduced. Further, the probability of the air introduced from the outside etc. enabling insects harmful to the plants to enter is reduced. To utilize CO₂ and heat in a horticultural greenhouse, the system as a whole is preferably installed in a horticultural greenhouse. In particular, by installing a heat storage tank 5 inside, the heat from the tank walls, for example, the heat which is gradually discharged to the outside of the tank at the night and other times when the air temperature falls, can also contribute to warming the inside of the horticultural greenhouse. The combustor 1 also produces light at the time of combustion, so it is also possible to simultaneously utilize the exhaust gas which contains CO₂ and that light.

### Second Embodiment

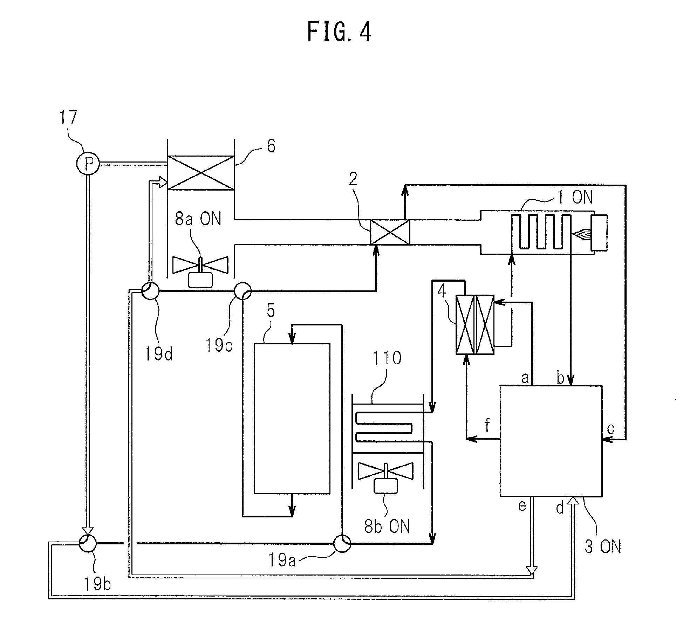

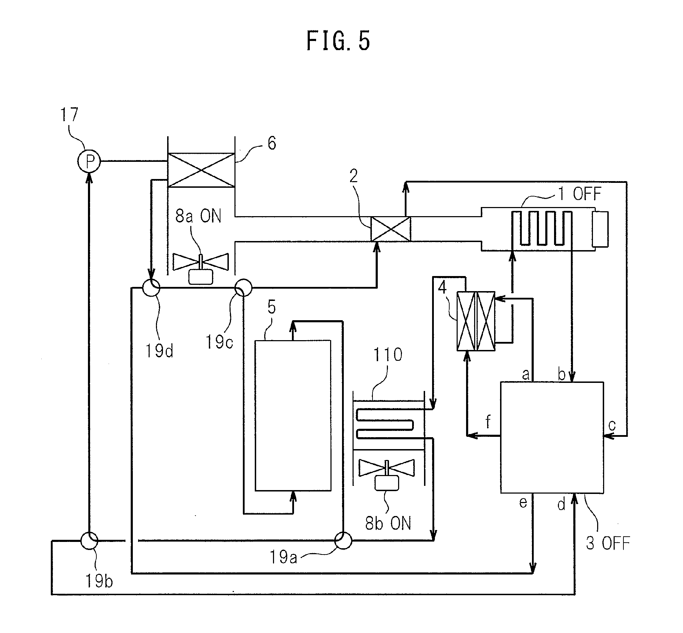

A second embodiment, as shown in FIGS. 4 and 5, is an embodiment which adds a humidity adjusting and heat storing device 110 to the horticultural greenhouse to enable humidification even during the day. If the warm water flows through the inside of the humidity adjusting and heat storing device 110, the desiccant desorbs the moisture. Below, FIGS. 4 and 5 will be referred to so as to explain the second embodiment. In FIG. 4, to supply cooled exhaust gas which contains CO₂ which is supplied to the horticultural greenhouse, in the same way as the first embodiment of FIG. 1, the combustor 1 is turned ON and the heat-driven refrigerator 3 is operated. FIG. 5 shows the case where the combustor 1 and heat-driven refrigerator 3 are turned OFF.

In FIG. 4, in the same way as the first embodiment of FIG. 1, the combustor 1 is turned ON and the fluid which is supplied from the heat storage tank 5 passes through the secondary heat exchanger 2 in the same way as FIG. 1 while flowing from the connecting port "c" through the heat-driven refrigerator 3. The circuit configuration in the heat-driven refrigerator 3 is the same as FIGS. 2 and 3. After this, the fluid which flows out from the connecting port "f" of the heat-driven refrigerator 3 is raised in temperature while exchanging heat in the liquid-liquid heat exchanger 4, passes through the later explained humidity adjusting and heat storing device 110, and returns to the heat storage tank 5. When supplying the horticultural greenhouse with cooled exhaust gas which contains CO₂, the result becomes the same as the first embodiment of FIG. 1. The advantageous effects are also similar.

The second embodiment, as explained above, adds a humidity adjusting and heat storing device 110 for humidifying the horticultural greenhouse during the day. The humidity adjusting and heat storing device 110 uses the desiccant which adsorbs or desorbs moisture. When warm water flows through the inside of the device 110, the desiccant is heated and the desiccant desorbs the adsorbed moisture. By supplying this desorbed moisture by the blower fan 8b, the inside of the greenhouse can be humidified. Next, when the humidity adjusting and heat storing device 110 finishes desorbing moisture and the heat storage tank 5 finishes storing heat, the positions of the three-way valves 19a to 19d can be switched as shown from FIG. 4 (combustor 1: ON) to FIG. 5 (combustor 1: OFF).

In FIG. 5, the heat-absorption use heat exchanger 6 is supplied with warm water flowing out from the top part (in FIG. 5) of the heat storage tank 5 by operation of the heat-discharge use pump 17. This being so, this heat exchanger 6 functions not for heat absorption as in FIG. 4, but functions as a heat-discharge use heat exchanger. Further, the air which is blown from the blower fan 8a is passed through the heat exchanger 6 and is supplied inside the greenhouse as warm air. Such warm air heating is possible as far as heat storage at the heat storage tank 5 exists. Note that, in the case of FIG. 5, if the heat-discharge use pump 17 does not operate, fluid does not circulate to the heat exchanger 6. On the other hand, in the case of FIG. 4, the pump 106c in the heat-driven refrigerator 3 (FIG. 2A) can be used to circulate fluid to the heat exchanger 6. Furthermore, in FIG. 5, by operating the blower fan 8b in the humidity adjusting and heat storing device 110, it is also possible to utilize, for heating, the heat capacity of the device 110 itself, the heat capacity of the desiccant itself, and the heat of adsorption produced when absorbing moisture.

Further, the humidity adjusting and heat storing device 110 has the following effect by blowing air to the desiccant. In general, a desiccant emits heat while adsorbing moisture of a gas which is supplied to the desiccant, but in the heat emitting state, the amount of adsorption of moisture by the desiccant ends up falling. Therefore, the blower fan 8b is driven to blow air so as to make air flow into the desiccant. Due to this blown air, the heat which is generated at the time of adsorption of the desiccant is discharged, so it is possible to secure the moisture adsorption capacity of the desiccant. Therefore, it becomes possible to secure the moisture adsorption capacity of the desiccant while blowing in dry warm air and, when adjusting the moisture, dehumidify the inside of the greenhouse. By adjusting the amounts of blown air based on the characteristics of the desiccant, it becomes possible to adjust the warm air temperature and dehumidification speed. As the desiccant, silica gel, zeolite activated carbon, alumina, metal oxides, quicklime, calcium chloride, lithium bromide, synthetic resin, or other inorganic-based or organic-based substances may be utilized.

### Third Embodiment

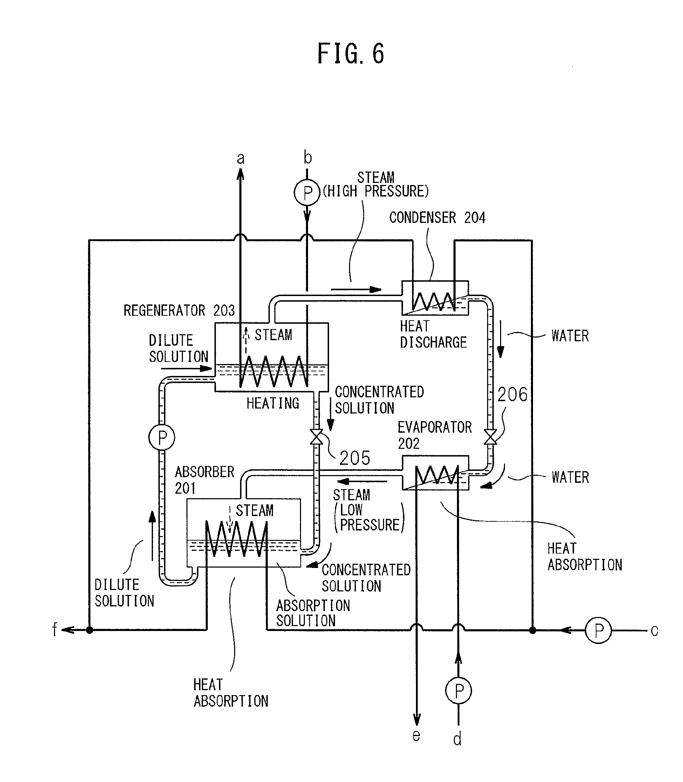

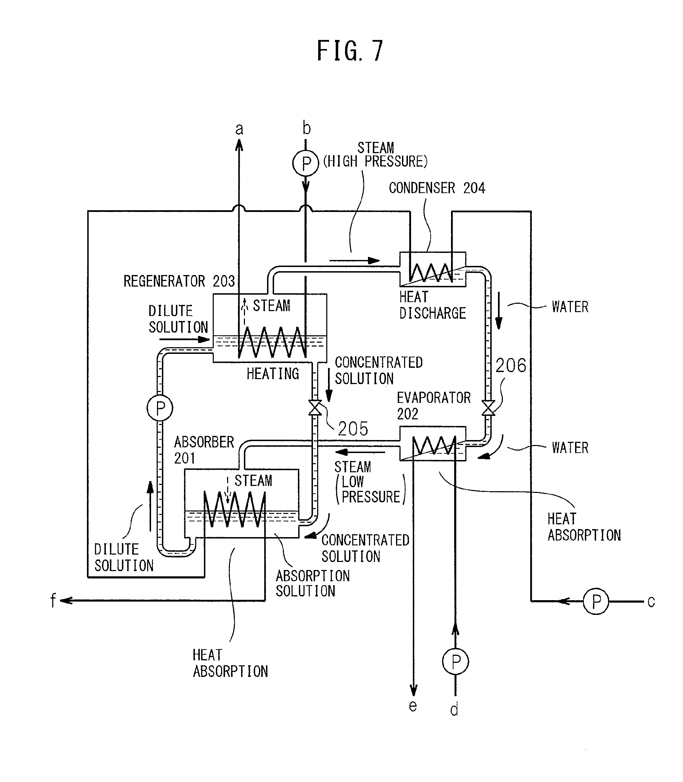

A third embodiment of FIGS. 6 and 7 is an embodiment which makes the heat-driven refrigerator 3 an absorption-type refrigeration cycle. The rest is the same as the first and second embodiments. That is, the connecting ports "a" to "f" of the heat-driven refrigerator 3 in FIGS. 1 and 3 to 5 are connected to the connecting ports "a" to "f" of FIGS. 6 and 7. In FIGS. 6 and 7, the line of the connecting ports "c" to "f" inside the heat-driven refrigerator 3 is parallel in FIG. 6 and is serial in FIG. 7. The absorption-type refrigeration cycle is a refrigerator which uses the low pressure generated by the known high absorption ability liquid (absorption solution, water-lithium bromide, ammonia water, etc.) to absorb a refrigerant at an absorber 201 so as to cause the refrigerant of an evaporator 202 to vaporize and create a low temperature.

Explaining this referring to FIG. 6, the refrigerant is made to evaporate by the low pressure evaporator 202 to create cold water/cold fluid at the line L2(d to e). The evaporated refrigerant is adsorbed at the absorber 201 in the absorption solution. The absorption solution which absorbs the refrigerant is heated at a regenerator 203 to make the refrigerant evaporate and separate. This concentrated solution passes through a pressure reducing valve 205 and again returns to the absorber 201. On the other hand, the evaporated and separated refrigerant is cooled and liquefied at a condenser 204, passes through a pressure reducing valve 206, and is again used for heat absorption at the evaporator 202. The embodiment of FIG. 6 branches the line of the connecting ports c-f in the heat-driven refrigerator 3 in parallel so as to flow through the condenser 204 and the absorber 201, while the embodiment of FIG. 7 is comprised of the condenser 204 and the absorber 201 connected for serial flow. This may be suitably selected by the temperature etc. of the cooling water which flows through the different component elements. The advantageous effects are similar to those in the first embodiment.

As explained above, the heat-driven refrigerator 3 may be an adsorption-type refrigeration cycle or may be an absorption-type refrigeration cycle. In the case of the adsorption-type refrigeration cycle, the working heat source temperature can be lowered more.

### Fourth Embodiment

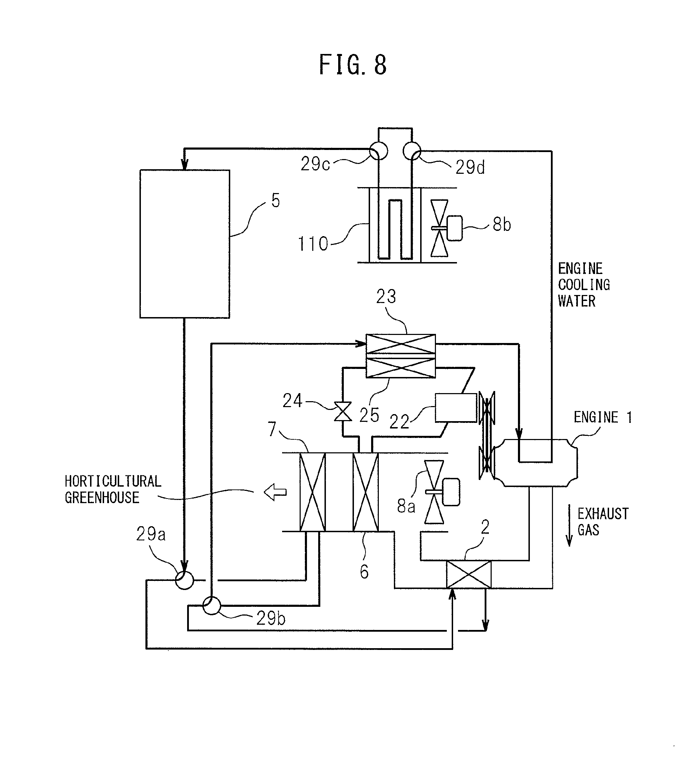

A fourth embodiment of FIG. 8 is an embodiment which uses an engine-driven type refrigerator (which uses the rotation of the engine by belt transmission to drive the compressor). It has an engine 1 as a combustor 1 which produces CO₂ and a compressor 22 which is driven by the engine. This compressor 22 forms the refrigeration cycle by connecting the condenser 25, expansion valve 24, and heat-absorption use heat exchanger (evaporator) 6 by pipes. A heat exchanger 23 is installed for heat exchange with the condenser 25 of this refrigeration cycle. As one example, the heat storage tank 5, the secondary heat exchanger 2 which recovers heat from the engine exhaust gas, the heat exchanger 23, the cooling part of the engine 1, and the humidity adjusting and heat storing device 110 are connected in that order by a fluid circuit F. The flow path is switched by the three-way valves 29a to 29d. The order of connection may be suitably set considering the temperatures of the secondary heat exchanger 2, heat exchanger 23, cooling part of the engine 1, etc. and is not limited to the embodiment of FIG. 8.

In the present embodiment, the power which is obtained from the engine 1 is used to turn the compressor 22 and operate the vapor compression-type refrigeration cycle to perform cooling. The engine 1 generates exhaust gas which contains CO₂ which was produced at the time the fuel was burned. The heat which is contained in the exhaust gas is recovered by the exhaust heat recovery device (secondary heat exchanger 2) and is recovered utilizing heat absorption which occurs in the above refrigeration cycle at the heat-absorption use heat exchanger (evaporator) 6 of the downstream side of the heat exchanger 2 as well. Due to this, the exhaust gas is cooled. The heat of the fluid of the heat storage tank 5 is recovered at the fluid circuit F by the secondary heat exchanger 2. At the downstream side, the heat which is discharged at the condenser 25 from the refrigeration cycle, is recovered by the heat exchanger 23, then the fluid flows to the inside of the engine as engine cooling water where the heat is recovered.

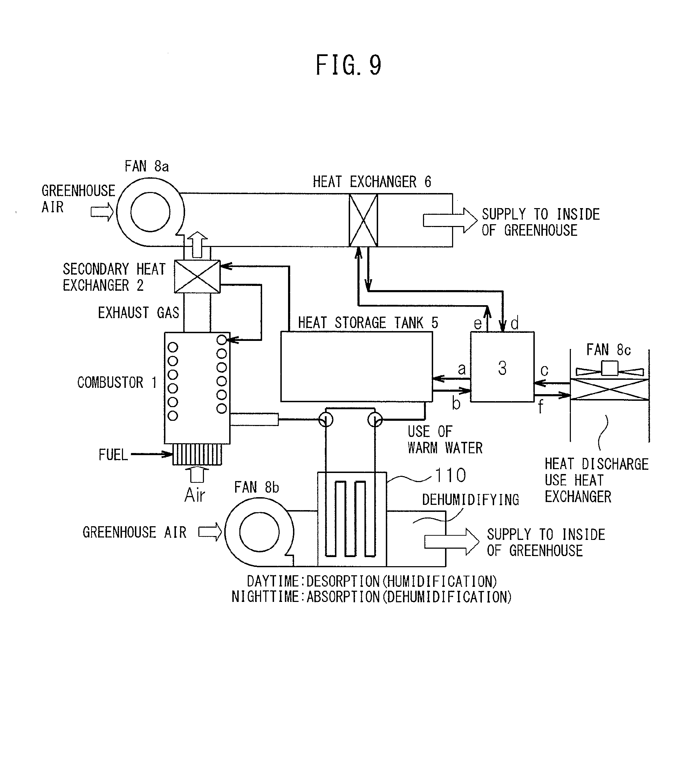

The humidity adjusting and heat storing device 110 performs a humidification (dehumidification) operation in the same way as the second embodiment and returns the fluid to the heat storage tank 5. In the state of FIG. 8, the humidity adjusting and heat storing device 110 uses the heat of the fluid which is returned to the tank 5 to heat the desiccant which is provided in the device 110 and discharges the adsorbed moisture. Further, the air from the blower fan 8b is humidified. When accomplishing the heat storage in the heat storage tank 5 and the supply of the desired amount of CO₂ to the greenhouse end, the three-way valves 29a and 29b are switched (90° clockwise) to connect the heat storage tank 5 and the heat-discharge use heat exchanger 7 and enable heating by running warm water in the heat storage tank 5. In the above circuit, in the same way as the second embodiment of FIGS. 4 and 5, a separate humidity adjusting and heat storing device 110 is attached, so it is also possible to perform dehumidification by switching the three-way valves 29c and 29d so that the warm water path of the tank 5 bypasses the device 110 and blowing air by the blower fan 8b. Note that the power source may be either an internal combustion engine or external combustion engine or a fuel cell which uses fuel containing carbon. In the embodiment of FIG. 9, the heat storage tank 5 stores high temperature warm water and uses this to operate the heat-driven refrigerator 3. The line of the connecting ports "c" and "f of the heat-driven refrigerator 3 cools the heat-discharge use heat exchanger by the fan 8c in the horticultural greenhouse (or cool it outside the greenhouse). The rest is the same as the first and second embodiments. In this embodiment, the heat (that is, the heat energy) which is produced at the combustor 1 is stored in the heat storage tank 5 in the form of warm water.

### Reference Signs List

- 1: combustor
- 3: refrigerator
- 5: heat storage tank
- 6: heat-absorption use heat exchanger

## Claims

1. A carbon dioxide supply device comprising a combustor (1), a refrigerator (3), and a heat-absorption use heat exchanger (6) through which a fluid cooled by a refrigeration cycle of the refrigerator (3) flows,
wherein in the case of combustion at said combustor (1) the carbon dioxide supply device runs exhaust gas, which contains carbon dioxide obtained, through said heat-absorption use heat exchanger (6) for cooling, and supplies the exhaust gas to the inside of a horticultural greenhouse.

2. The carbon dioxide supply device according to claim 1, wherein said refrigerator (3) is a heat-driven refrigerator which uses heat energy which is produced by combustion of said combustor (1) to drive the refrigeration cycle of said refrigerator (3).

3. The carbon dioxide supply device according to claim 1 or 2, wherein said supply device is further provided with a heat storage tank (5).

4. The carbon dioxide supply device according to claim 3, wherein said heat storage tank (5) recovers heat energy which is produced by combustion at said combustor (1), and waste heat which is generated from said heat-driven refrigerator (3).

5. The carbon dioxide supply device according to any one of claims 1 to 4, wherein said refrigeration cycle of said refrigerator (3) is an adsorption-type refrigeration cycle or an absorption refrigeration cycle.

6. The carbon dioxide supply device according to any one of claims 3 to 5, wherein said supply device is provided with a humidity adjusting and heat storing device (110) which uses fluid from said heat storage tank (5) to desorb moisture which a desiccant has adsorbed.

7. The carbon dioxide supply device according to any one of claims 3 to 6,
wherein said supply device is further provided with a heat-discharge use heat exchanger (7) which uses a blower fan (8) to run air and supply it to the inside of said horticultural greenhouse, and
is further provided with change-over valves (9a to 9d, 10) so that said heat-driven refrigerator (3) can be driven by fluid from said heat storage tank (5), and waste heat generated from said heat-driven refrigerator (3) can be discharged by said heat-discharge use heat exchanger (7).

8. The carbon dioxide supply device according to claim 7,
wherein said supply device is provided with said heat-discharge use heat exchanger (7) downstream of said heat-absorption use heat exchanger (6) and,
air which is blown by said blower fan (8), passes through said heat-absorption use heat exchanger (6) and then flows into said heat-discharge use heat exchanger (7).

9. The carbon dioxide supply device according to any one of claims 3 to 6, wherein said supply device is further provided with change-over valves (19a to 19d) which make said heat-absorption use heat exchanger (6) function as a heat-discharge use heat exchanger by running fluid from said heat storage tank (5).

10. The carbon dioxide supply device according to claim 1,
wherein said refrigerator is a vapor compression type refrigeration cycle with a compressor which is driven by an engine having a combustor (1),
said heat-absorption use heat exchanger (6) is an evaporator of said vapor compression type refrigeration cycle, and
exhaust gas, which contains carbon dioxide which is produced by combustion at said combustor (1), passes through said heat-absorption use heat exchanger (6) to cool the exhaust gas, and the exhaust gas is supplied to the inside of the horticultural greenhouse.

11. The carbon dioxide supply device according to claim 1, wherein said supply device is further provided with a heat storage tank (5),
said heat storage tank (5) stores heat energy obtained by combustion at said combustor (1), and
the heat energy is used to drive the heat-driven refrigerator (3).

12. The carbon dioxide supply device according to any one of claims 1 to 11, wherein said supply device is installed inside a horticultural greenhouse.

13. The carbon dioxide supply device according to any one of claims 1 to 12, wherein said supply device separately utilizes heat energy and light of said combustor (1).

14. The carbon dioxide supply device according to any one of claims 1 to 13, wherein exhaust gas, which contains carbon dioxide obtained by combustion of said combustor (1), run through said heat-absorption use heat exchanger (6) and is cooled to a temperature at which the exhaust gas can be supplied to plants in said horticultural greenhouse.
